Europäisches Patentamt

European Patent Office

Office européen des brevets

(11) Publication number: **0 468 403 A2**

# EUROPEAN PATENT APPLICATION

(21) Application number: **91112241.4**

(22) Date of filing: **22.07.91**

(51) Int. Cl.5: **G06F 15/40**

(30) Priority: **23.07.90 JP 192995/90**

(43) Date of publication of application:
**29.01.92 Bulletin 92/05**

(84) Designated Contracting States:
**DE FR GB**

(71) Applicant: **HITACHI, LTD.**
**6, Kanda Surugadai 4-chome**
**Chiyoda-ku, Tokyo 101(JP)**

Applicant: **HITACHI SEIBU SOFT WARE CO., LTD.**
**5-29, Kitahama-3-chome,**
**Chuo-ku, Osaka(JP)**

(72) Inventor: **Kanba, Hiroshi, Hirano Eakuria Roiyaru Haitsu**
**6-12-502, Nishiwaki-2-chome**
**Hirano-ku, Osaka-shi(JP)**
Inventor: **Takadachi, Masato**
**Kotohira Apato, 320-1, Ozenji**
**Asao-ku, Kawasaki-shi(JP)**

Inventor: **Eguchi, Ryoji**
**1376, Suenaga**
**Takatsu-ku, Kawasaki-shi(JP)**
Inventor: **Mimura, Hirokazu**
**15-2, Higashikawashimacho**
**Hodogaya-ku, Yokohama-shi(JP)**
Inventor: **Takahashi, Noriyuki, Hitachi Sakai Shataku**
**256, Hiraokacho**
**Sakai-shi(JP)**
Inventor: **Kushiro, Yasuo**
**24-29, Kushiro-3-chome**
**Kawanishi-shi(JP)**
Inventor: **Akiba, Toshio**
**25-2, Nishiogu-1-chome**
**Arakawa-ku, Tokyo(JP)**

(74) Representative: **Patentanwälte Beetz sen. - Beetz jun. Timpe - Siegfried - Schmitt-Fumian- Mayr**
**Steinsdorfstrasse 10**
**W-8000 München 22(DE)**

(54) Method for management of information resources and system therefor.

(57) In a computer system having a plurality of computers (1, 1', 1'') connected to one another, an information resource management system in which the matching of some information resource (a-1, a-1', a-2, a-2', a-3, a-3') identically existing in the computers is automatically adjusted according to a predetermined procedure on the basis of recognizing, when the information resource is renewed on one computer, whether the information resource exists identically in the other computers.

# FIG. I

**COMPUTER** 1

**2 INFORMATION CONTROLLER**

INFORMATION CONTROL ANALYZER SECTION

TRANSFER INFORMATION CONTROL SECTION

3

4

102

101

104

105

103

a-1 INFORMATION RESOURCE

RELATIONAL INFORMATION

b

a-2 INFORMATION RESOURCE

5

TRANSMISSION UNIT

RECEIVING UNIT

**COMPUTER** 1'

**2' INFORMATION CONTROLLER**

TRANSFER INFORMATION CONTROL SECTION

INFORMATION CONTROL ANALYZER SECTION

4'

3'

113

114

115

a-1' INFORMATION RESOURCE

RELATIONAL INFORMATION

b'

a-2' INFORMATION RESOURCE

## BACKGROUND OF THE INVENTION

The present invention relates, in network communication, to a system for preforming intercomputer transfer of information resources stored identically in a plurality of computers and a system for warranting the identity of information resources at the time of renewal thereof.

As a known example, Japanese Patent Unexamined Publication No. JP-A-63-211026 discloses a system having a function for communication between a host computer and workstations, in which each of the host computer and workstations has an up load means and a down load means so that data item information managed in the system is exchanged.

In the conventional information resource management method, information resources were not managed in relation to the attribute of information. When a part of information resources was transferred from one computer to another computer, the contents of the information resources in the computer on a transmitter-side often discorded with the contents of the information resources in the computer on a receiver side.

Further, when information resources having been already transferred to another computer was renewed or deleted, the range of influence of the renewal or deletion could not be grasped. That is, renewal/deletion could not be performed in some portion in which change becomes indirectly necessary by the influence of the renewal/deletion effected in a certain portion. There was therefore a problem in that it was difficult to warrant the identity of the contents of information resources among computers.

Further, since the transfer work depends on a request of a user, there was a problem in that it was difficult to warrant the identity of the contents of information resources among computers.

Further, when information resources were to be transferred again upon renewal of a part thereof, all the information resources including not-renewed portions were transferred. There was therefore a problem in that not only the quantity of transfer was large but the transfer efficiency was poor.

## SUMMARY OF THE INVENTION

An object of the present invention is therefore to provide a system for warranting the identity of information resources stored identically in a plurality of computers at the time of initial transfer of information and for keeping the identity by transferring periodically or non-periodically only a necessary portion of the information upon addition, renewal or deletion of the information resources.

In order to attain the foregoing object, the following means are used.

(1) Means for relationally storing information resources and relational information of the information resources.

(2) Means for transferring information resources together with relational information of the information resources.

(3) Means for acquiring history information of transfer of information resources and for managing the history information.

(4) Means for judging whether information resources to be renewed have been already transferred to other computers or not.

(5) Means for automatically transferring only difference information of information resources according to a predetermined procedure when information resources having been already stored identically in other computers are renewed or deleted.

(6) Means for acquiring history information of transfer of each information resource set containing a plurality of information resources to thereby warrant the identity of information resources for each set of information resources in a plurality of computers.

(7) Means for automatically re-transferring information resources while confirming the matching of information resources at a predetermined point of time.

(8) Means for reducing loads on a communication circuit at the time of re-transfer of information resources after renewal thereof by transferring information resources while separating the information resources into attributes and data values.

When information resources stored relationally with relational information of the information resources are to be transferred, the relational information of the information resources is transferred simultaneously with the concerned information.

Further, transfer history information is relationally stored for each information resource in advance, so that information as to whether the information resource has been already transferred to other computers can be known when the information resource is to be renewed or deleted.

Further, a predetermined procedure is relationally stored for each information resource in advance, so that the information can be transferred automatically according to the procedure.

Further, an information resource set including a plurality of information resources is defined in advance, so that information resources can be transferred set by set.

Further, a point of time for confirming the matching of information resources is registered in advance, so that necessary information resources can be re-transferred automatically while confirming the identity of information resources stored identically in a plurality of computers.

Further, information resources are transferred after separated into attributes and data values, so that not only the quantity of transferred information can be reduced but the transfer efficiency can be improved at the time of re-transfer of information resources.

BRIEF DESCRIPTION OF THE DRAWINGS

Fig. 1 is a view showing a basic configuration of the present invention;

Fig. 2 is a view showing a configuration of information resources;

Fig. 3 is a flow chart showing transmission/reception of information resources;

Fig. 4 is a view showing addition of transfer history information;

Fig. 5 is a view showing an example of transfer history information;

Fig. 6 is a flow chart showing renewal of information resources;

Fig. 7 is a view showing registration of transfer procedure information;

Fig. 8 is a view showing an example of transfer procedure information;

Fig. 9 is a flow chart showing a processing for renewing information resources;

Fig. 10 is a view showing addition of set definition information, set transfer history information and set transfer procedure information;

Fig. 11 is a view showing an example of set definition information, set transfer history information and set transfer procedure information;

Fig. 12 is a view showing addition of a timer monitor;

Fig. 13 is a flow chart showing the starting of transfer based on the timer monitor;

Fig. 14 is a view showing a configuration of a system for warranting the matching of information resources stored identically in three or more computers; and

Fig. 15 is a view showing a detailed example of information resources.

DESCRIPTION OF THE PREFERRED EMBODIMENT

An embodiment of the present invention will be described below in detail with reference to the drawings.

An embodiment in which two computers are connected is illustrated as a typical example.

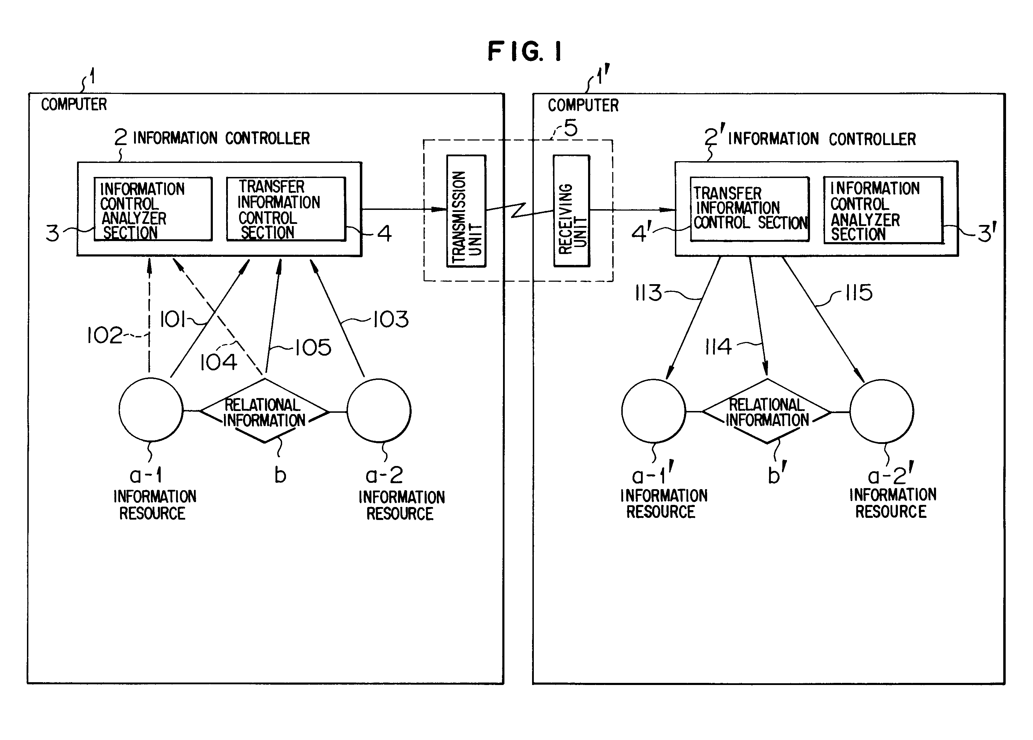

Fig. 1 shows a basic configuration of the present invention.

A computer 1 contains an information resource a-1 and another information resource a-2 and relational information b between the information resources and has an information controller 2 which includes an information control analyzer section 3 for performing addition, renewal, deletion and retrieval of information on the computer, and a transfer information control section 4 for receiving information from another computer.

In the same manner as described above, a computer 1' contains an information resource a-1' and another information resource a-2' and relational information b' between the information resources and has an information controller 2' which includes an information control analyzer section 3' for performing addition, renewal, deletion and retrieval of information on the computer, and a transfer information control section 4' for receiving information from another computer.

This two computers are connected to each other by a communication system 5 to make information transfer possible.

When the information resource a-1 is transmitted to the computer 1', the relational information b between the information resources is simultaneously transmitted to the computer 1' by knowing the information resource a-2 related to the information resource a-1 with reference to the relation information b through the information controller 2. As a result, the matching at the time of initial transfer, of information resources stored identically in the computers 1 and 1' can be warranted.

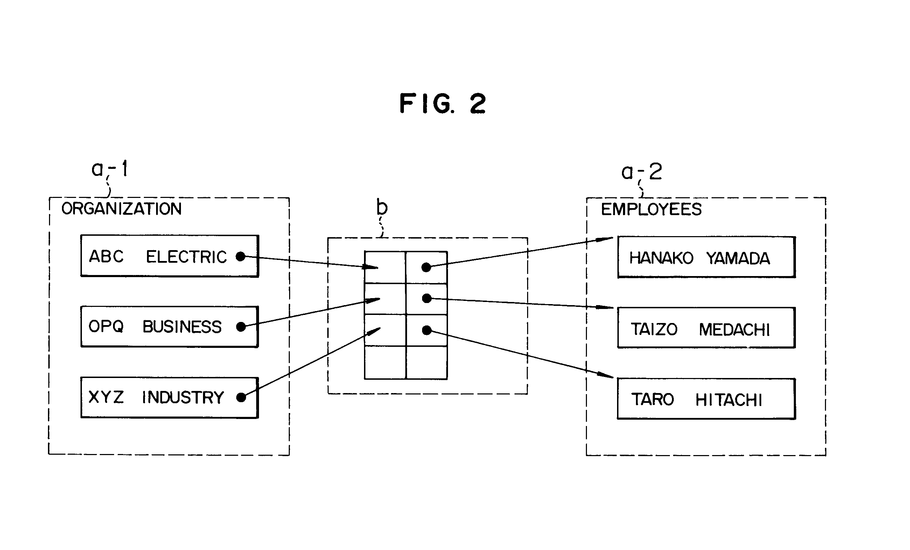

Fig. 2 shows an example of the configuration of the information resources a-1 and a-2 and the relational information b.

The information resource a-1 contains information of its own and logical pointers to the relational information b. The relational information b contains logical pointers to the other information resource a-2. The information resource a-2 can be deduced from the information resource a-1 through the relational information b by circulating the logical pointers successively.

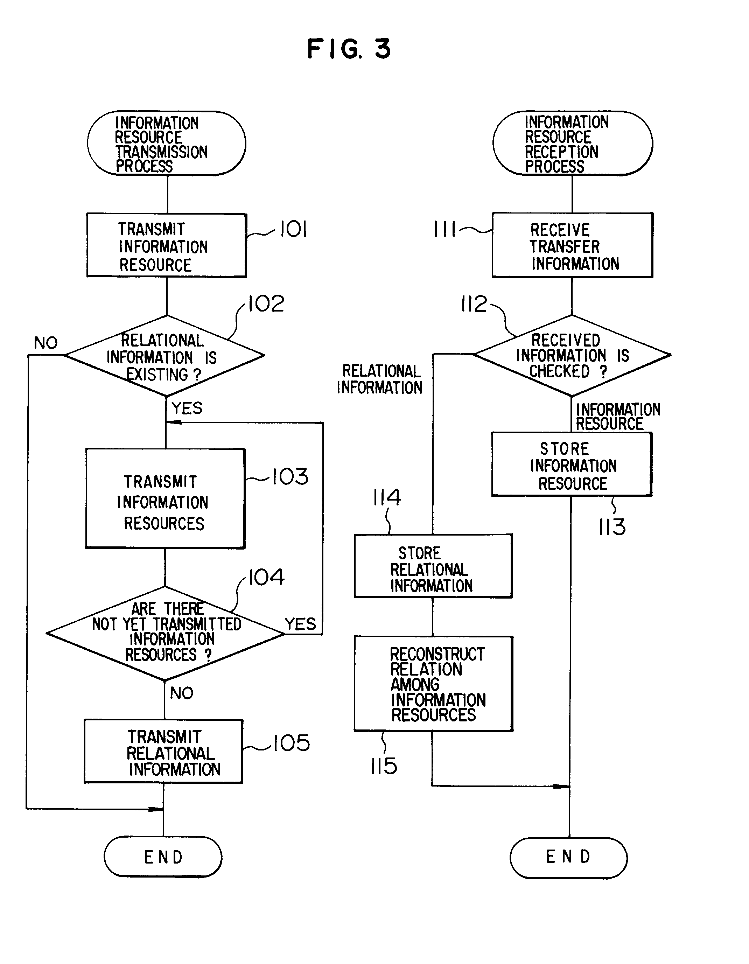

Fig. 3 shows a procedure for transmitting the information resource a-1 to the computer 1'.

The following means is means for transferring "XYZ INDUSTRY" in the information resource a-1 shown in Fig. 2 from the computer 1 to the computer 1' in the system of Fig. 1.

The information resource transmission routine shown in Fig. 3 is that provided on the computer 1. When an instruction to transmit an information resource is given to the computer 1, the information resource transmission routine is started. First, in the step 101, "XYZ INDUSTRY" of the information resource a-1 transferred from the transfer information control section 4 of Fig. 1 is transmitted.

In the next step 102, a judgment is made in the information control analyzer section 4 by the presence/absence of the logical pointer to the relational information b related to the "XYZ INDUSTRY" as to whether the relational information concerning the "XYZ INDUSTRY" of the information resource a-1 is present or not. When there is no relational information, the transmission routine is terminated. When the relational information is present, the transfer information control section 4 recognizes "Hitachi Taro" of the information resource a-2 from the relational information b by circulating the logical pointer so that "Hitachi Taro" is transmitted in the step 103.

Further in the step 104, a judgment is made by reference to transfer history information related to information resources as to whether any information resource a-2 having been not yet transmitted is present or not. When the information resource a-2 having been not yet transmitted is present, the step 103 is repeated. When there is any information resource a-2 having been not yet transmitted, the relational information b is transmitted in the step 105 and then the information resource transmission routine is terminated.

In the following, the information resource reception routine shown in Fig. 3 is that provided on the computer 1'.

The transfer information is received in the transfer information control section 4' of the computer 1' and then the kind of the received information is discriminated (in the steps 111 and 112).

When the received information is an information resource, the information resource a-1' or a-2' is stored in the computer 1' in the step 113. When the received information is relational information, the relational information b' is stored in the computer 1' in the step 114 and then the relation between "XYZ INDUSTRY" of the information resource a-1' previously transmitted and "Hitachi Taro" of the information resource a-2' is reconstructed in the step 115.

Through the aforementioned routine, "XYZ INDUSTRY" of the information resource a-1 and "Hitachi Taro" of the information resource a-2 are stored identically in the computers 1 and 1' while the relation therebetween is warranted, so that the matching, at the time of initial transfer, of information resources can be warranted.

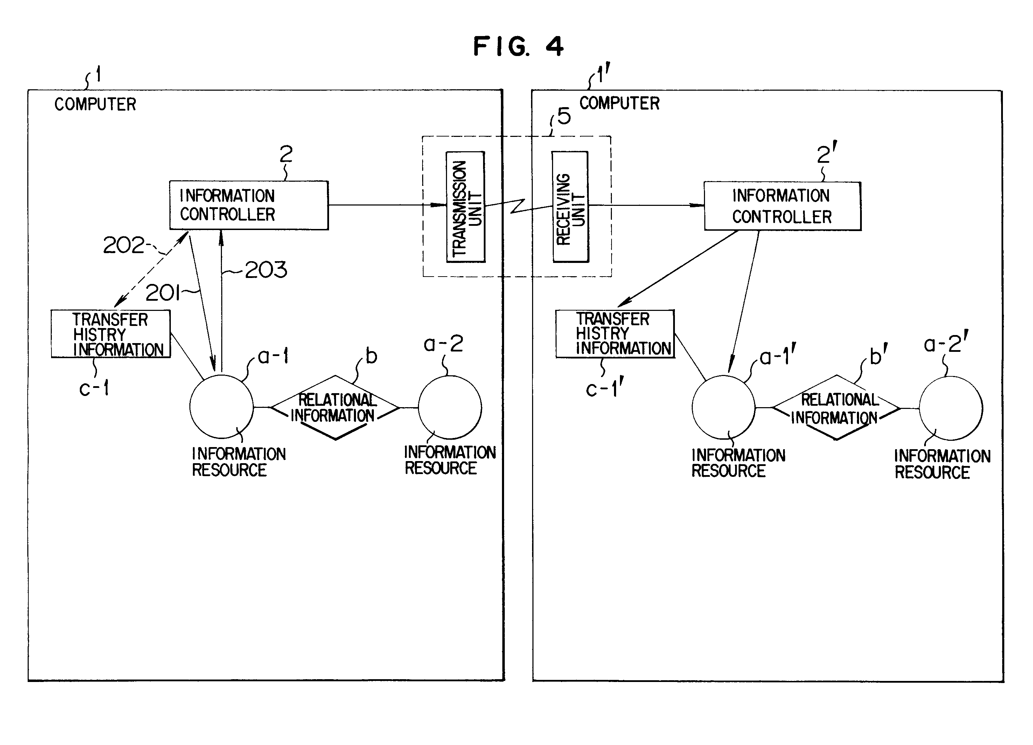

Fig. 4 shows a system in which means for acquiring transfer history information c-1 of the information resource a-1 is added to the system of Fig. 1.

In the computer 1, the record of transfer of the information resource a-1 is stored as transfer history information c-1 related to the information resource a-1. When the information resource a-1 is to be transferred, various kinds of information contained in the transfer history information c-1 are renewed and the identical condition on the other

computer with respect to the information resource can be grasped. In the computer 1', the record of transfer of the information resourse a-1 is stored as transfer history information c-1' related to the information resource a-1' in the same manner as described above. Thus, it is possible to grasp the identical condition on the other computer with respect to the information resource in which information as to from which computer and when the information resource a-1' was transferred from and when the information resource a-1' was transferred is included in the transfer history information c-1'.

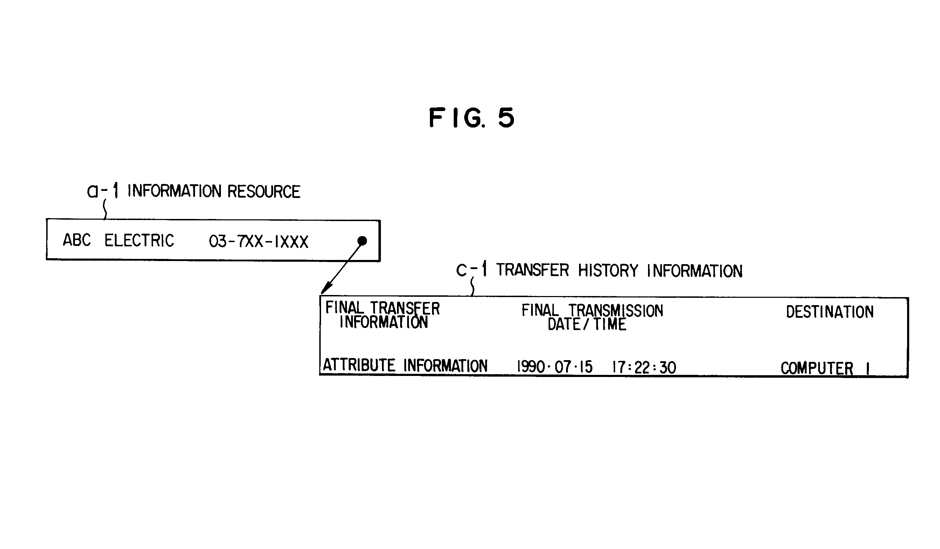

Fig. 5 shows an example of the transfer history information c-1. The information resource a-1 contains a data value of "ABC ELECTRIC 03-7**-1-***" and a logical pointer of the transfer history information c-1. The transfer history information c-1 contains the kind of final transfer information, the date of transmission, and the destination of transmission.

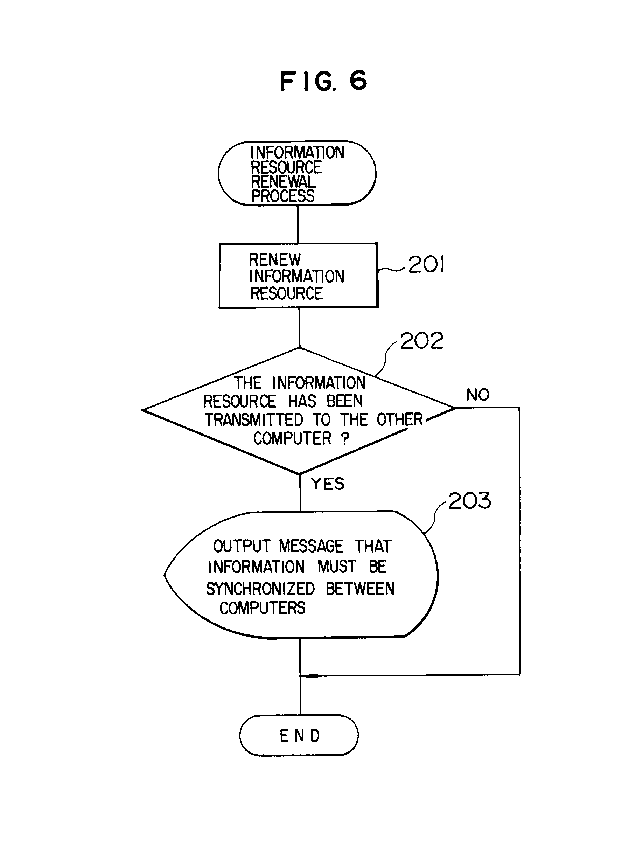

Fig. 6 shows a procedure in the case where the information resource a-1 is renewed.

The procedure will be described with reference to Figs. 4, 5 and 6 in the case where the information resource a-1 stored identically in the computers 1 and 1' is renewed on the computer 1 in the system of Fig. 4. First, in the step 201, the information resource a-1 is renewed.

In the next step 202, a judgment is made in the information controller 2, on the basis of the presence/absence of date information and destination information contained in the transfer history information c-1, as to whether the information resource has been already transferred to the other computer and has been stored identically. Referring to the kind of final transfer information, the date of transmission and the destination of transmission contained in the transfer history information c-1, the message that information must be synchronized between computers is displayed in the step 203 if necessary.

In respect to the renewal in the computer 1', the necessity that information must be synchronized between computers can be known by reference to the date of reception and the destination of reception contained in the transfer history information c-1', in the same manner as described above.

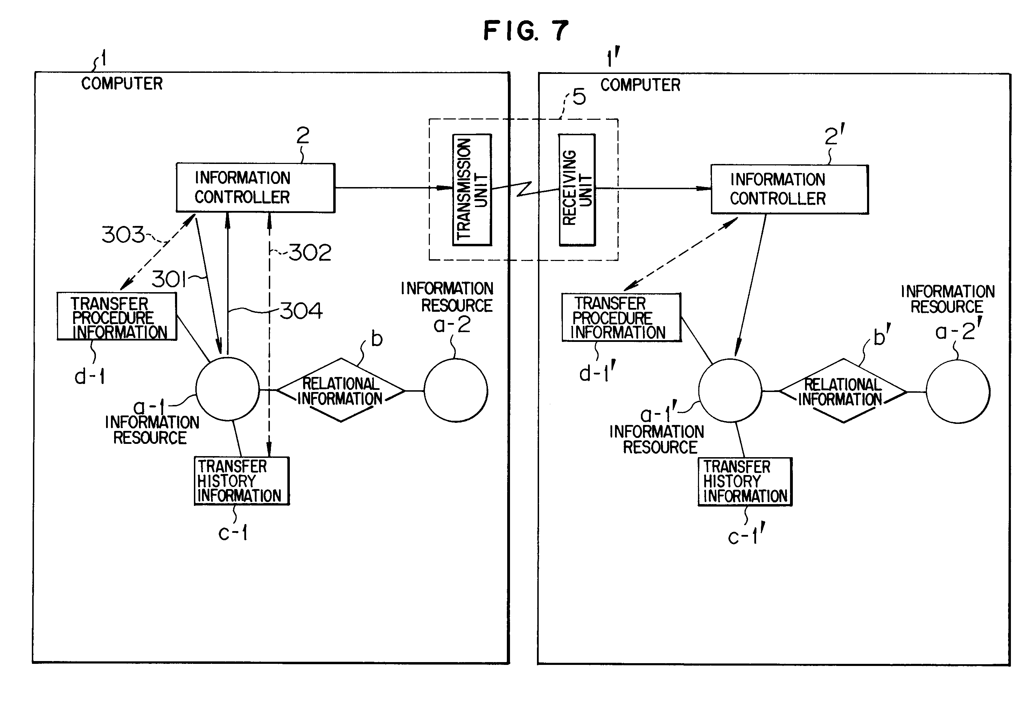

Fig. 7 shows a system in which means for registering a transfer procedure information d-1 of the information resource a-1 is added to the system of Fig. 4.

When the information resource a-1 is renewed and the necessity of transferring the information resource with reference to the transfer history information c-1 is detected, the information resource a-1 can be transmitted to the computer 1' automatically with reference to the transfer procedure information d-1.

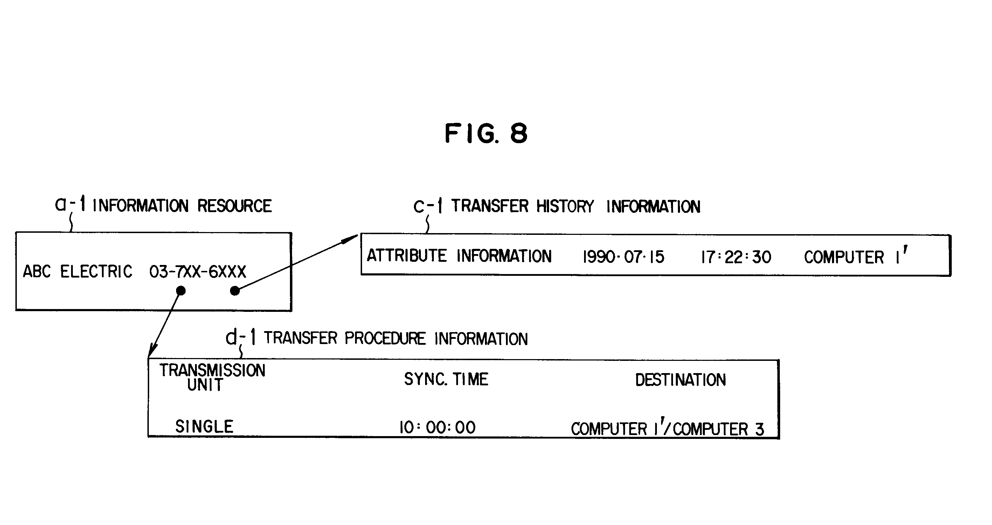

Fig. 8 shows an example of the transfer procedure information d-1. The information resource a-1 contains a data value of "ABC ELECTRIC 03-7\*\*-6\*\*\*" and logical pointers of the transfer history information c-1 and the transfer procedure information d-1. The transfer procedure information d-1 contains information such as unit, designation, time, destination of transmission, etc.

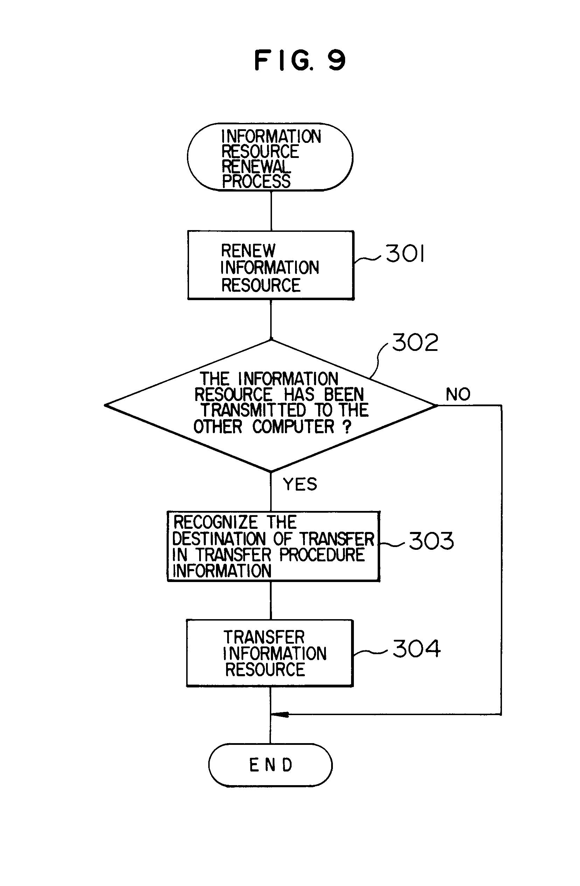

The procedure will be described with reference to Figs. 7, 8 and 9 in the case where the information resource a-1 stored identically in the computers 1 and 1' is renewed in the computer 1 in the system of Fig. 7.

First in the step 301, the information resource a-1 is renewed. In the next step 302, a judgment is made in the information controller 2, on the basis of the presence/absence of date information and destination information contained in the transfer history information c-1, as to whether the information resource has been already transferred to the other computer and has been stored identically. If necessary, the destination of transfer is recognized by reference to the transfer procedure information d-1 in the step 303 and then the information resource a-1 is transmitted to the other computer in the step 304 to synchronize information between the computers 1 and 1' by reference to the kind of final transfer information, the date of transmission and the destination of transmittion contained in the transfer history information c-1.

In respect to the renewal in the computer 1', information can be synchronized between the computers by reference to the date of reception and the destination of reception contained in the transfer history information c-1', in the same manner as described above.

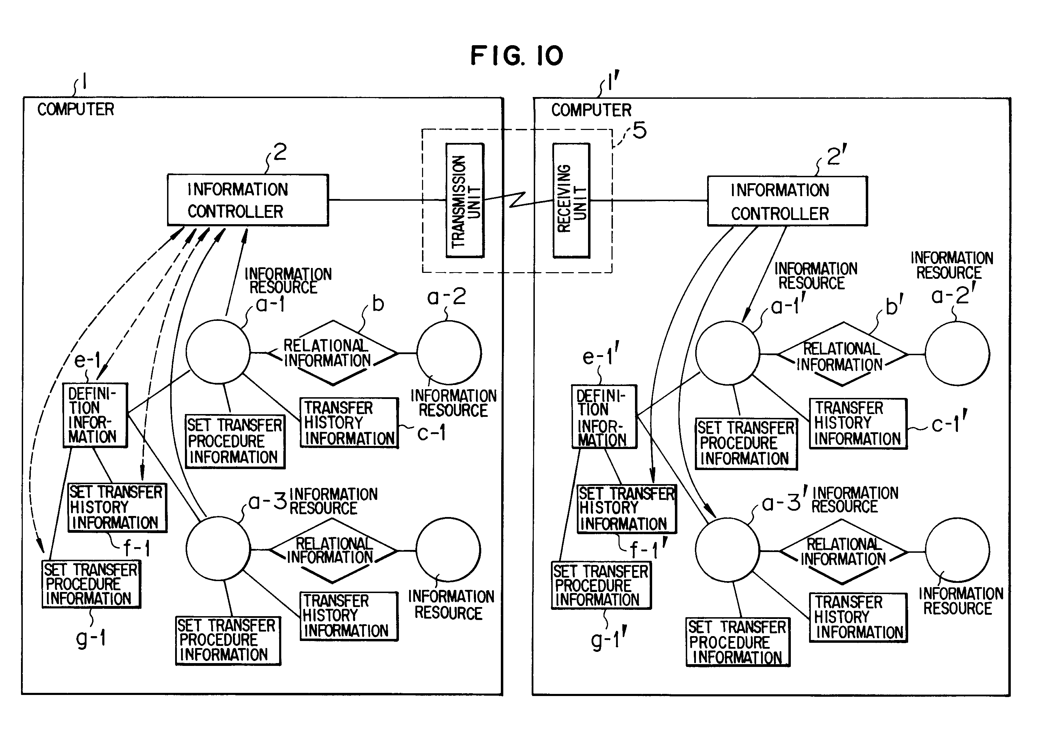

Fig. 10 shows a system in which set definition information e-1, set transfer history information f-1 and set transfer procedure information g-1 between information resources a-1 and a-3 are added to the system of Fig. 7. The set definition information e-1 has a list of information resources contained in the set. The set transfer history information f-1 has the record of the history of transfer of the set as a unit.

One set contains one or more information resources, so that sets of information resources can be transferred set by set.

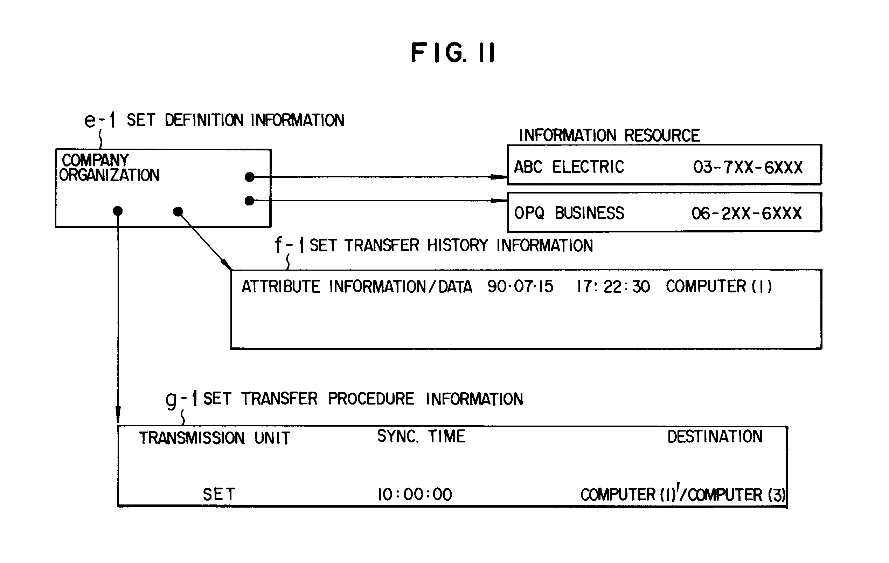

Fig. 11 shows an example of the set definition information e-1, the set transfer history information f-1 and the set transfer procedure information g-1.

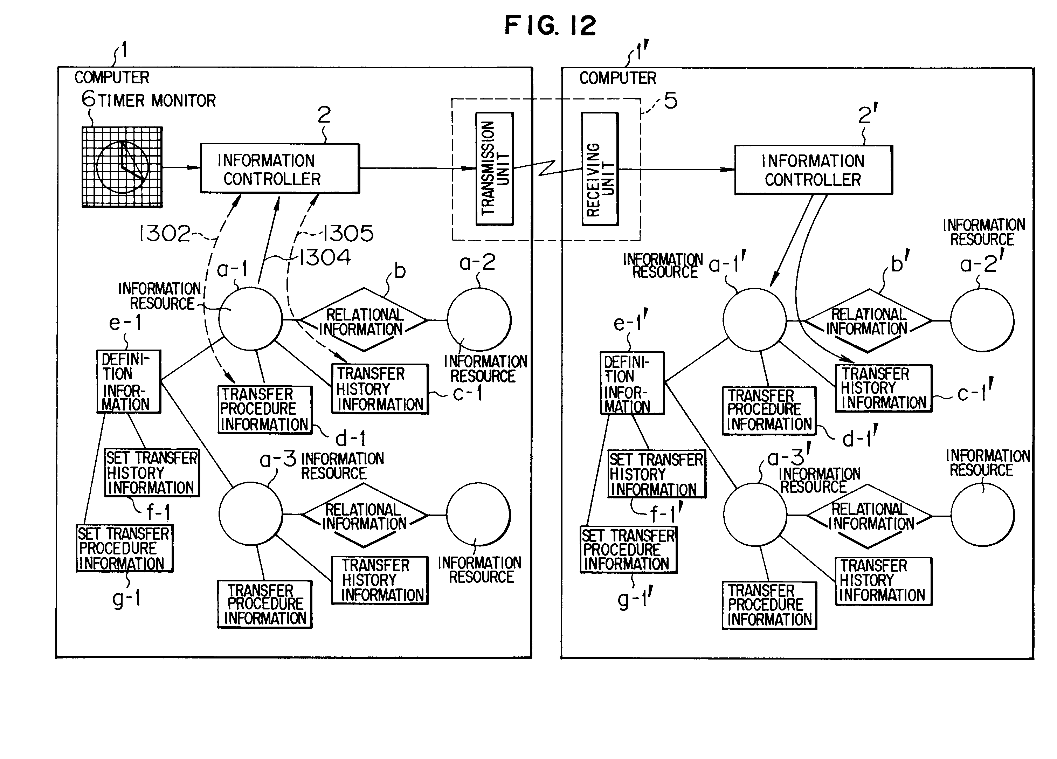

Fig. 12 shows a system in which a timer monitor 6 for actuating the computer 1 to start transfer by time is added to the system of Fig. 10.

The timer monitor 6 makes monitoring through a timer and makes starting of transfer at a predetermined point of time, so that the matching of information resources stored identically in a plurality of computers can be warranted.

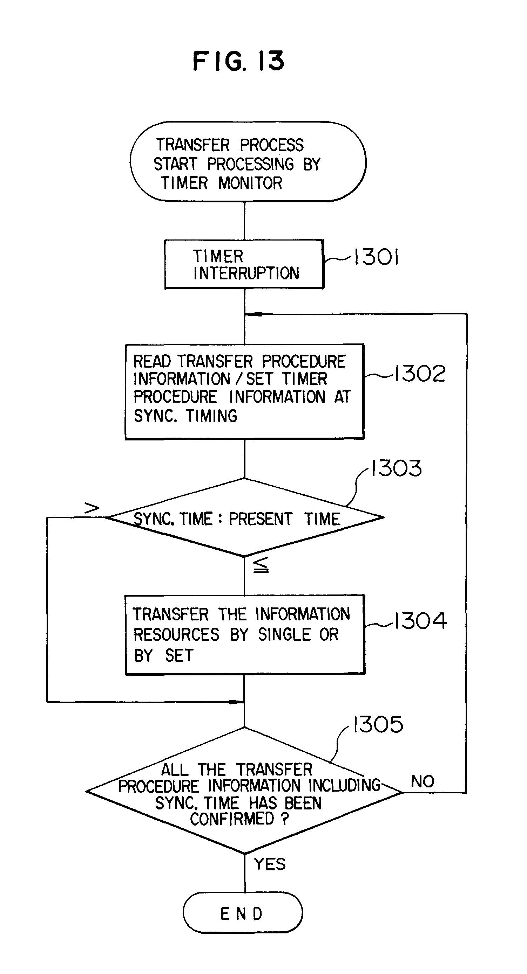

Fig. 13 shows a procedure for starting transfer based on the timer monitor.

The procedure for starting transfer based on the timer monitor to warrant the matching of information resources on a plurality of computers will be described below with reference to Figs. 12 and 13.

A timer interruption to the computer 1 is generated from the timer monitor 6 at a predetermined point of time (in the step 1301).

In the next step 1302, the information controller 2 reads designated synchronization time registered in the transfer procedure information d-1 or set transfer procedure information, therefrom.

In the step 1303, the present time is compared with the designated synchronization time. If the present time exceeds the designated synchronization time, the information resources are transferred in the step 1304.

In the next step 1305, a judgment is made as to whether transfer has been made according to all of the transfer procedure information. If some information having been not yet transferred remains, controlling is shifted to the step 1302. If there is no information having been not yet transferred, the procedure is terminated.

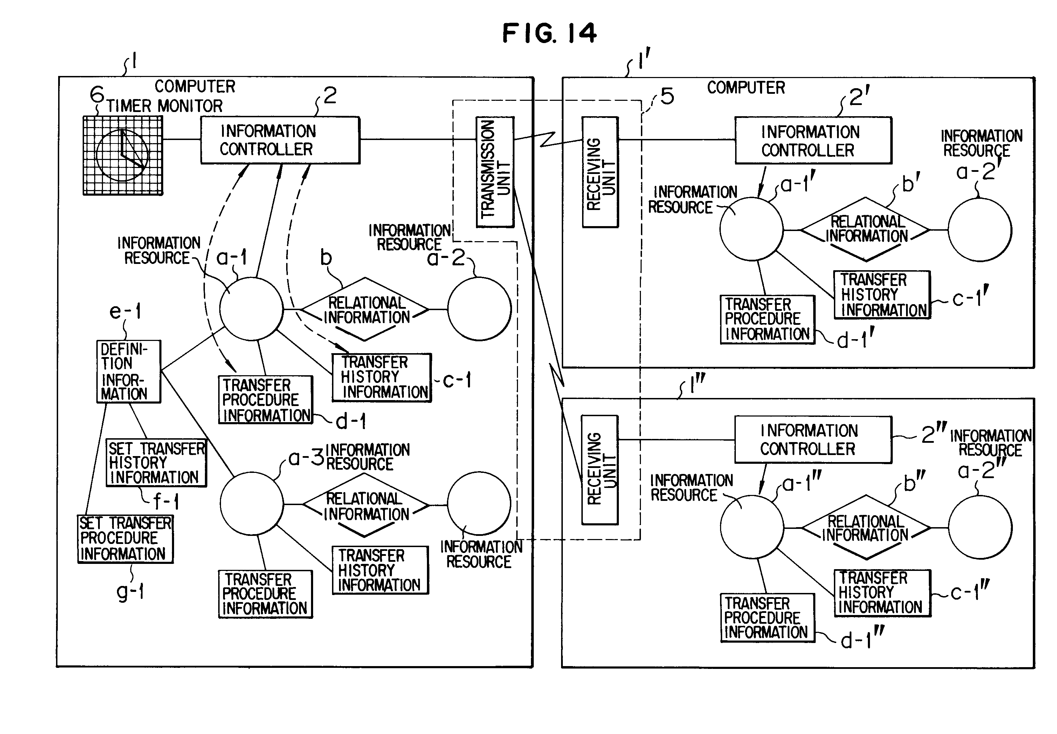

Fig. 14 shows a system for warranting the matching of information resources stored identically in three or more computers. The system is formed by extending the system of Fig. 12, that is, by adding to the information controller 2 a system for exclusively transferring information between computers. That is, a system having a computer 1" and an information controller 2" which includes an information control analyzer section 3'" for performing addition, renewal, deletion and retrieval of information on the computer such as information resources a-1" and a-2" and relational information b" between the information resources, and a transfer information control section 4" for transmitting information to another computer and for receiving information from another computer is added to the configuration of Fig. 1.

Fig. 14 shows an example in which the information resource a-1' is renewed in this system. The fact that the information resource a-1' has been transferred from the computer 1 is known by reference to the transfer information history c-1' related to the information resource a-1'. Then, an instruction to renew the information resource a-1 is given from the computer 1' to the computer 1 through a communication circuit 5.

The computer 1 which has received the instruction makes the renewal of the information resource a-1. Further, by reference to the transfer history c-1 related to the information resource a-1, a new information resource a-1 is transferred respectively to the computers 1 and 1" to which the information resource a-1 has been already transferred. At the same time, the transfer history c-1 is renewed.

The computers 1' and 1'' receive the new information resource a-1 from the computer 1 and replace the information resources a-1' and a-1'' by the new information resource a-1.

By the aforementioned operation, the matching of the information resources a-1, a-1' and a-1'' is warranted.

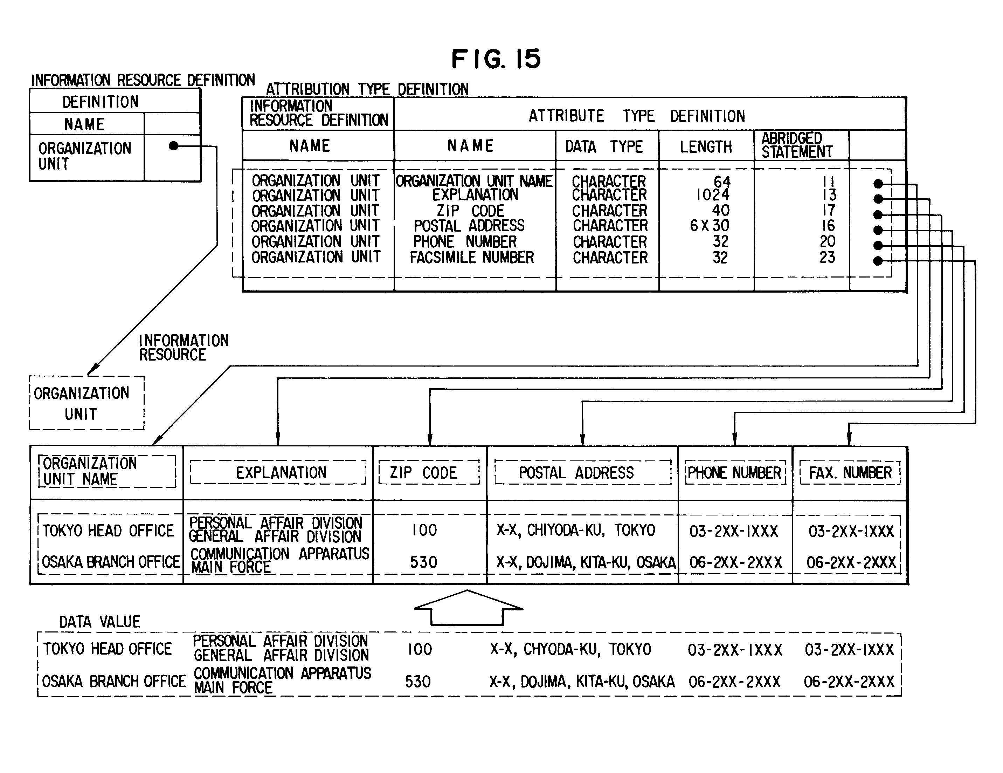

Fig. 15 shows a detailed example of information resources.

One organization unit of information resources can be represented by "organization unit" as a name in information resource definition. The organization unit of information resources is characterized by "organization unit name", "explanation", "postal code number", "postal address", "phone number" and "FAX number" as names in attribute definition. Fig. 15 shows the case where "Tokyo Head Office" and "Osaka Branch Office" are provided as real data. The information resource definition, the attribute definition and data values are stored in a computer. By storing information while relating data to the attributes of the data, only a renewed portion of information resources can be transferred when renewed information is transferred to another computer.

According to the present invention, when an information resource stored relationally with information related to the information resource is transferred, the relational information is transferred simultaneously with the information resource. Accordingly, the identical information, inclusive of another information resource related to the information resource and relational information related to the other information resource, can be stored in another computer easily.

Further, transfer history information related to each information resource is stored in advance, so that when the information resource is renewed or deleted, a knowledge can be acquired as to whether the information resource has been already transferred to another computer or not yet.

Further, a predetermined procedure related to each information resource is stored in advance, so that the information resource can be automatically transferred according to the procedure to thereby make it possible to warrant the identity of information resources between computers.

Further, only a renewed or deleted portion can be transferred while separating each information resource into the attribute thereof and the data value thereof, so that the quantity of transfer at the time of re-transfer, of the information resource can be reduced.

## Claims

1. An information resource management method for a computer system having a plurality of computers (1, 1', 1'') connected to one another, comprising:

a first step of relationally storing information resources (a-1, a-1', a-2, a-2', a-3, a-3') and relational information (b, b', b'') of said information resources;

a second step of transferring said information resources and said relational information of said information resources;

a third step of acquiring transfer history information (c-1, c-1', c-1'') of said information resources and managing said transfer history information; and

a fourth step of recognizing, when said information resources are renewed in one computer, whether said information resources have been transferred to the other computers.

2. An information resource management method for a computer system having a plurality of computers (1, 1', 1'') connected to one another, comprising:

a first step of relationally storing information resources (a-1, a-1', a-2, a-2', a-3, a-3') and relational information (b, b', b'') of said information resources;

a second step of transferring said information resources and said relational information of said information resources;

a third step of acquiring transfer history information (c-1, c-1', c-1'') of said information resources and managing said transfer history information; and

a fourth step of recognizing, when said information resources are renewed in one computer, whether said information resources exist identically in the other computers, and adjusting, on the basis of the recognition, the matching of said information resources identically existing in said plurality of computers according to a predetermined procedure.

3. An information resource management method for a computer system having a plurality of computers (1, 1', 1'') connected to one another, comprising:

a first step of relationally storing information resources (a-1, a-1', a-2, a-2', a-3, a-3') and relational information (b, b', b'') of said information resources;

a second step of transferring said information resources and said relational information of said information resources;

a third step of acquiring transfer history information (c-1, c-1', c-1'') of said information resources and managing said transfer history information; and

a fourth step of transferring an information resource set containing plural ones of said information resources while warranting the matching between said information resources to thereby perform renewal of said information resources while warranting the matching of said information resource set among said plurality of computers.

4. An information resource management method for a computer system having a plurality of computers (1, 1', 1'') connected to one another, comprising:

a first step of relationally storing information resources (a-1, a-1', a-2, a-2', a-3, a-3') and relational information (b, b', b'') of said information resources;

a second step of transferring said information resources and said relational information of said information resources;

a third step of acquiring transfer history information (c-1, c-1', c-1'') of said information resources and managing said transfer history information; and

a fourth step of re-transferring difference information between said information resources while confirming the matching between said information resources to warrant the matching between said information resources stored identically in said plurality of computers, at a predetermined point of time.

5. An information resource management method for a computer system having a plurality of computers (1, 1', 1'') connected to one another, comprising:

a first step of relationally storing information resources (a-1, a-1', a-2, a-2', a-3, a-3') and relational information (b, b', b'') of said information resources;

a second step of transferring said information resources and said relational information of said information resources;

a third step of acquiring transfer history information (c-1, c-1', c-1'') of said information resources and managing said transfer history information; and

a fourth step of re-transferring some information resource after renewal thereof while separating said information resource into the attribute thereof and the data value thereof.

6. An information resource management system having a plurality of computers (1, 1', 1'') connected to one another, which comprises:

means for relationally storing information resources (a-1, a-1', a-2, a-2', a-3, a-3') and relational information (b, b', b'') of said information resources;

means for transferring said information resources and said relational information of said information resources;

means for acquiring transfer history information (c-1, c-1', c-1'') of said information resources and for managing said transfer history information; and

means for recognizing, when said information resources are renewed in one computer, whether said information resources have been transferred to the other computers.

7. An information resource management system having a plurality of computers (1, 1', 1'') connected to one another, which comprises:

means for relationally storing information resources (a-1, a-1', a-2, a-2', a-3, a-3') and relationally information (b, b', b'') of said information resources;

means for transferring said information resources and said relational information of said information resources;

means for acquiring transfer history information (c-1, c-1', c-1'') of said information resources and managing said transfer history information; and

means for recognizing, when said information resources are renewed in one computer, whether said information resources exist identically in the other computers, and adjusting, on the basis of the recognition, the matching of said information resources identically existing in said plurality of computers according to a predetermined procedure.

8. An information resource management system having a plurality of computers (1, 1', 1'') connected to one another, which comprises:

means for relationally storing information resources (a-1, a-1', a-2, a-2', a-3, a-3') and relational information (b, b', b'') of said information resources;

means for transferring said information resources and said relational information of said information resources;

means for acquiring transfer history information (c-1, c-1', c-1'') of said information resources and managing said transfer history information; and

means for transferring an information resource set containing plural ones of said information resources while warranting the matching between said information resources to thereby perform renewal of said information resources while warranting the matching of said information resource set among said plurality of computers.

9. An information resource management system having a plurality of computers (1, 1', 1'') connected to one another, which comprises:

means for relationally storing information resources (a-1, a-1', a-2, a-2', a-3, a-3') and relational information (b, b', b'') of said information resources;

means for transferring said information resources and said relational information of said information resources;

means for acquiring transfer history information (c-1, c-1', c-1'') of said information resources and managing said transfer history information; and

means for re-transferring difference information between said information resources while confirming the matching between said information resources to warrant the matching between said information resources stored identically in said plurality of computers, at a predetermined point of time.

10. An information resource management system having a plurality of computers (1, 1', 1'') connected to one another, which comprises:

means for relationally storing information resources (a-1, a-1', a-2, a-2', a-3, a-3') and relational information (b, b', b'') of said information resources;

means for transferring said information resources and said relational information of said information resources;

means for acquiring transfer history information (c-1, c-1', c-1'') of said information resources and managing said transfer history information; and

means for re-transferring some information resource after renewal thereof while separating said information resource into the attribute thereof and the data value thereof.

# FIG. I

COMPUTER 1

2 INFORMATION CONTROLLER

INFORMATION CONTROL ANALYZER SECTION 3

TRANSFER INFORMATION CONTROL SECTION 4

TRANSMISSION UNIT 5

RECEIVING UNIT

102 101 103 104 105

a-1 INFORMATION RESOURCE

b RELATIONAL INFORMATION

a-2 INFORMATION RESOURCE

COMPUTER 1'

2' INFORMATION CONTROLLER

TRANSFER INFORMATION CONTROL SECTION 4'

INFORMATION CONTROL ANALYZER SECTION 3'

113 114 115

a-1' INFORMATION RESOURCE

b' RELATIONAL INFORMATION

a-2' INFORMATION RESOURCE

EP 0 468 403 A2

10

# FIG. 2

EP 0 468 403 A2

# FIG. 3

**INFORMATION RESOURCE TRANSMISSION PROCESS**

TRANSMIT INFORMATION RESOURCE — 101

RELATIONAL INFORMATION IS EXISTING ? — 102

NO

YES

TRANSMIT INFORMATION RESOURCES — 103

ARE THERE NOT YET TRANSMITTED INFORMATION RESOURCES ? — 104

YES

NO

TRANSMIT RELATIONAL INFORMATION — 105

END

**INFORMATION RESOURCE RECEPTION PROCESS**

111 — RECEIVE TRANSFER INFORMATION

112 — RECEIVED INFORMATION IS CHECKED ?

RELATIONAL INFORMATION

INFORMATION RESOURCE

STORE INFORMATION RESOURCE — 113

STORE RELATIONAL INFORMATION — 114

RECONSTRUCT RELATION AMONG INFORMATION RESOURCES — 115

END

12

# FIG. 4

COMPUTER **1**

INFORMATION CONTROLLER **2**

202

203

201

TRANSFER HISTRY INFORMATION
c-1

a-1
INFORMATION RESOURCE

b
RELATIONAL INFORMATION

a-2
INFORMATION RESOURCE

TRANSMISSION UNIT
RECEIVING UNIT
**5**

COMPUTER **1'**

INFORMATION CONTROLLER **2'**

TRANSFER HISTRY INFORMATION
c-1'

a-1'
INFORMATION RESOURCE

b'
RELATIONAL INFORMATION

a-2'
INFORMATION RESOURCE

EP 0 468 403 A2

# FIG. 5

a-1 INFORMATION RESOURCE

| ABC ELECTRIC | 03-7XX-IXXX | |

c-1 TRANSFER HISTORY INFORMATION

| FINAL TRANSFER INFORMATION | FINAL TRANSMISSION DATE / TIME | DESTINATION |
|---|---|---|
| ATTRIBUTE INFORMATION | 1990·07·15   17:22:30 | COMPUTER I |

EP 0 468 403 A2

EP 0 468 403 A2

# F I G. 6

```
        ┌─────────────────┐
        │  INFORMATION    │
        │  RESOURCE       │
        │  RENEWAL        │
        │  PROCESS        │
        └─────────────────┘
                 │
        ┌─────────────────┐
        │  RENEW          │      201
        │  INFORMATION    │
        │  RESOURCE       │
        └─────────────────┘
                 │
              ╱─────╲
          ╱──         ──╲
       ╱  THE INFORMATION  ╲
      ╱  RESOURCE HAS BEEN   ╲   202    NO
      ╲  TRANSMITTED TO THE OTHER ╱────────┐
       ╲   COMPUTER ?        ╱             │
          ╲──         ──╱                  │
              ╲─────╱                      │
                 │ YES                     │
                                  203      │
        ╱────────────────────╲            │
       │  OUTPUT MESSAGE THAT  │           │
       │  INFORMATION  MUST BE │           │
       │  SYNCHRONIZED BETWEEN │           │
       │  COMPUTERS            │           │
        ╲────────────────────╱            │
                 │                         │
                 │◄────────────────────────┘
                 │
             ┌───────┐
             │ E N D │
             └───────┘
```

15

**FIG. 7**

# FIG. 8

**a-1 INFORMATION RESOURCE**

| ABC ELECTRIC   03-7XX-6XXX |
|---|

**c-1 TRANSFER HISTORY INFORMATION**

| ATTRIBUTE INFORMATION | 1990·07·15 | 17:22:30 | COMPUTER 1' |
|---|---|---|---|

**d-1 TRANSFER PROCEDURE INFORMATION**

| TRANSMISSION UNIT | SYNC. TIME | DESTINATION |
|---|---|---|
| SINGLE | 10:00:00 | COMPUTER 1'/COMPUTER 3 |

EP 0 468 403 A2

# FIG. 9

INFORMATION
RESOURCE
RENEWAL
PROCESS

RENEW
INFORMATION
RESOURCE — 301

THE INFORMATION
RESOURCE HAS BEEN
TRANSMITTED TO THE
OTHER COMPUTER ? — 302

NO

YES

RECOGNIZE THE
DESTINATION OF TRANSFER
IN TRANSFER PROCEDURE
INFORMATION — 303

TRANSFER
INFORMATION
RESOURCE — 304

END

# FIG. 10

COMPUTER

INFORMATION CONTROLLER 2

TRANSMISSION UNIT

RECEIVING UNIT 5

INFORMATION CONTROLLER 2'

COMPUTER 1'

INFORMATION RESOURCE a-1

RELATIONAL INFORMATION b

INFORMATION RESOURCE a-2

e-1

DEFINITION INFORMATION

SET TRANSFER PROCEDURE INFORMATION

TRANSFER HISTORY INFORMATION c-1

INFORMATION RESOURCE

SET TRANSFER HISTORY INFORMATION f-1

a-3 INFORMATION RESOURCE

RELATIONAL INFORMATION

SET TRANSFER PROCEDURE INFORMATION g-1

SET TRANSFER PROCEDURE INFORMATION

TRANSFER HISTORY INFORMATION

INFORMATION RESOURCE

INFORMATION RESOURCE a-1'

RELATIONAL INFORMATION b'

INFORMATION RESOURCE a-2'

e-1'

DEFINITION INFORMATION

SET TRANSFER PROCEDURE INFORMATION

TRANSFER HISTORY INFORMATION c-1'

SET TRANSFER HISTORY INFORMATION f-1'

a-3' INFORMATION RESOURCE

RELATIONAL INFORMATION

SET TRANSFER PROCEDURE INFORMATION g-1'

SET TRANSFER PROCEDURE INFORMATION

TRANSFER HISTORY INFORMATION

INFORMATION RESOURCE

EP 0 468 403 A2

# FIG. II

e-1 SET DEFINITION INFORMATION

INFORMATION RESOURCE

| COMPANY ORGANIZATION | |
|---|---|

| ABC ELECTRIC | 03-7XX-6XXX |
|---|---|
| OPQ BUSINESS | 06-2XX-6XXX |

f-1 SET TRANSFER HISTORY INFORMATION

| ATTRIBUTE INFORMATION / DATA 90·07·15  17:22:30  COMPUTER (1) |
|---|

g-1 SET TRANSFER PROCEDURE INFORMATION

| TRANSMISSION UNIT | SYNC. TIME | DESTINATION |
|---|---|---|
| SET | 10:00:00 | COMPUTER (1)/COMPUTER (3) |

EP 0 468 403 A2

FIG. 12

# FIG. 13

TRANSFER PROCESS
START PROCESSING BY
TIMER MONITOR

TIMER
INTERRUPTION — 1301

READ TRANSFER PROCEDURE
INFORMATION / SET TIMER
PROCEDURE INFORMATION AT
SYNC. TIMING — 1302

1303

SYNC. TIME : PRESENT TIME

TRANSFER THE INFORMATION
RESOURCES BY SINGLE OR
BY SET — 1304

1305

ALL THE TRANSFER
PROCEDURE INFORMATION INCLUDING
SYNC. TIME HAS BEEN
CONFIRMED ?          NO

YES

E N D

# FIG. 14

COMPUTER 1

6 TIMER MONITOR

2 INFORMATION CONTROLLER

INFORMATION RESOURCE a-1

b RELATIONAL INFORMATION

INFORMATION RESOURCE a-2

TRANSFER HISTORY INFORMATION c-1

TRANSFER PROCEDURE INFORMATION d-1

e-1 DEFINITION INFORMATION

SET TRANSFER HISTORY INFORMATION f-1

SET TRANSFER PROCEDURE INFORMATION g-1

a-3 INFORMATION RESOURCE

RELATIONAL INFORMATION

TRANSFER PROCEDURE INFORMATION

TRANSFER HISTORY INFORMATION

INFORMATION RESOURCE

5 TRANSMISSION UNIT

COMPUTER 1'

5 RECEIVING UNIT

INFORMATION CONTROLLER 2'

INFORMATION RESOURCE a-1'

b' RELATIONAL INFORMATION

INFORMATION RESOURCE a-2'

TRANSFER PROCEDURE INFORMATION d-1'

TRANSFER HISTORY INFORMATION c-1'

COMPUTER 1''

RECEIVING UNIT

INFORMATION CONTROLLER 2''

INFORMATION RESOURCE a-2''

INFORMATION RESOURCE a-1''

b'' RELATIONAL INFORMATION

TRANSFER PROCEDURE INFORMATION d-1''

TRANSFER HISTORY INFORMATION c-1''

EP 0 468 403 A2

# FIG. 15

INFORMATION RESOURCE DEFINITION

| DEFINITION | |
|---|---|
| NAME | |
| ORGANIZATION UNIT | ● |

ATTRIBUTION TYPE DEFINITION

| INFORMATION RESOURCE DEFINITION | ATTRIBUTE TYPE DEFINITION | | | | |
|---|---|---|---|---|---|
| NAME | NAME | DATA TYPE | LENGTH | ABRIDGED STATEMENT | |
| ORGANIZATION UNIT | ORGANIZATION UNIT NAME | CHARACTER | 64 | 11 | ● |
| ORGANIZATION UNIT | EXPLANATION | CHARACTER | 1024 | 13 | ● |
| ORGANIZATION UNIT | ZIP CODE | CHARACTER | 40 | 17 | ● |
| ORGANIZATION UNIT | POSTAL ADDRESS | CHARACTER | 6 X 30 | 16 | ● |
| ORGANIZATION UNIT | PHONE NUMBER | CHARACTER | 32 | 20 | ● |
| ORGANIZATION UNIT | FACSIMILE NUMBER | CHARACTER | 32 | 23 | ● |

INFORMATION RESOURCE

ORGANIZATION UNIT

| ORGANIZATION UNIT NAME | EXPLANATION | ZIP CODE | POSTAL ADDRESS | PHONE NUMBER | FAX. NUMBER |
|---|---|---|---|---|---|
| TOKYO HEAD OFFICE | PERSONAL AFFAIR DIVISION GENERAL AFFAIR DIVISION | 100 | X-X, CHIYODA-KU, TOKYO | 03-2XX-1XXX | 03-2XX-1XXX |
| OSAKA BRANCH OFFICE | COMMUNICATION APPARATUS MAIN FORCE | 530 | X-X, DOJIMA, KITA-KU, OSAKA | 06-2XX-2XXX | 06-2XX-2XXX |

DATA VALUE

| TOKYO HEAD OFFICE | PERSONAL AFFAIR DIVISION GENERAL AFFAIR DIVISION | 100 | X-X, CHYODA-KU, TOKYO | 03-2XX-1XXX | 03-2XX-1XXX |
|---|---|---|---|---|---|
| OSAKA BRANCH OFFICE | COMMUNICATION APPARATUS MAIN FORCE | 530 | X-X, DOJIMA, KITA-KU, OSAKA | 06-2XX-2XXX | 06-2XX-2XXX |

EP 0 468 403 A2